# EUROPÄISCHE PATENTSCHRIFT

(11) **EP 1 674 142 B1**
(45) Veröffentlichungstag und Bekanntmachung des Hinweises auf die Patenterteilung: **16.07.2008**
(21) Anmeldenummer: 05111685.3
(22) Anmeldetag: 05.12.2005
(51) Int. Cl.: B01D 35/16, B01D 29/96, F01M 11/03, F16N 39/06

(54) **Flüssigkeitsfilter mit einer Entleerungsvorrichtung**
Fluid filter with a drain mechanism
Filtre pour liquides avec un méchanisme de vidage

(30) Priorität: 06.12.2004 DE 102004058885
(43) Veröffentlichungstag der Anmeldung: 28.06.2006
(73) Patentinhaber: MANN+HUMMEL GmbH, 71638 Ludwigsburg (DE)
(72) Erfinder: Kolczyk, Markus, 74395, Mundelsheim (DE); Weindorf, Martin, 70806 Kornwestheim (DE); Blum, Ralf, 84168 Anam (DE)

(56) Entgegenhaltungen:
- EP-A- 0 839 563
- EP-A- 1 327 471
- EP-A- 1 419 809
- EP-A- 1 479 427
- DE-A1- 19 538 883
- US-A1- 2002 020 660
- US-B1- 6 706 181

## Beschreibung

Die Erfindung betrifft einen Flüssigkeitsfilter, insbesondere für das Schmieröl einer Brennkraftmaschine.

### Stand der Technik

Ein derartiger Flüssigkeitsfilter ist z. B. aus der DE 198 44 647 A bekannt. Dieser Filter hat ein topfförmiges Gehäuse, dessen Einbauöffnung für die Filterpatrone nach unten weist und in den nach Einbau der Filterpatrone ein Schraubdeckel eingeschraubt werden kann. Einlass und Auslass für den Filter befinden sich im Gehäusetopf, d. h. im oberen Teil des Filtergehäuses. Dadurch sind das Gehäuse und insbesondere der Schraubdeckel auch außerhalb der Betriebszeit immer mit der zu filternden Flüssigkeit gefüllt. Dies erschwert einen Wechsel der Filterpatrone, da diese Restflüssigkeit beim Aufschrauben des Deckels in die Umwelt gelangen kann. Deswegen ist im Schraubdeckel an seinem geodätisch tiefsten Punkt eine Ablassschraube vorgesehen, welche zunächst gelöst werden kann, um den Flüssigkeitsrest im Schraubdeckel zu entfernen. Hierdurch wird der Wechsel der Filterpatrone wesentlich erleichtert.

Der vorgeschlagene Flüssigkeitsfilter wird insbesondere als Ölfilter im Einsatz von Brennkraftmaschinen verwendet. Hier sind die Platzverhältnisse aufgrund anderer Komponenten im Motorraum häufig sehr beengt. Deswegen ist ein Betätigen der Ablassschraube häufig mit Problemen verbunden. Außerdem muss das aus der Ablassöffnung herauslaufende Öl aufgefangen werden. Auch dieses ist aufgrund der beengten Einbausituation häufig nur unter erschwerten Bedingungen möglich. Da ein Auffangbehälter mit genügendem Volumen nicht unter der Ablassöffnung platziert werden kann.

Aus der US 2002-0020660 ist ein Flüssigkeitsfilter bekannt, bei dem ein Filterelement mit zwei offenen Endscheiben in ein Gehäuse eingesetzt wird. Eine der Endscheiben wird an einem Stutzen befestigt und eine andere Endscheibe wird mit einem System aus Umgehungsventil und Ablaufstutzen versehen, wobei der Ablaufstutzen durch ein Einschieben des Verschlussstückes geöffnet werden kann.

Aus der EP 1 419 809 entnimmt der Fachmann ein Filterelement, welches ebenfalls zwei offene Endscheiben besitzt, die durch entsprechende Komponenten verschlossen sind. Auch hier kann durch ein Eindrücken eines Stopfens das Element von außen geöffnet werden, damit Flüssigkeit abfließen kann.

Aufgabe der Erfindung ist es daher, einen Flüssigkeitsfilter mit einem Flüssigkeitsablass im Schraubdeckel zu schaffen, welcher eine zuverlässige Trennung zwischen Roh- und Reinflüssigkeitsseite gewährleistet. Diese Aufgabe wird durch die Merkmale des Patentanspruches 1 gelöst.

### Offenbarung der Erfindung

Im Schraubdeckel ist ein Ablass für Flüssigkeitsrückstände vorgesehen, wobei im Bereich des Ablasses ein Mittel zum Öffnen und Schließen des Ablasses angeordnet ist. Dieses Mittel verschließt eine runde Ablauföffnung, die in der Mittelachse des Gehäuses angeordnet ist, über eine Dichtung. Die Dichtung kann z. B. ein O-Ring sein, es ist aber auch möglich, dass das Mittel zum Öffnen und Schließen aufgrund einer entsprechenden Materialwahl als solche Dichtfunktionen übernimmt. Das Mittel ist dabei mit dem Filterelement verbunden und ist mit der Endscheibe des Filterelementes verbunden. Das Mittel ist derart mit der Endscheibe des Filterelementes verbunden, dass dessen Axialspiel bezogen auf die Mittelachse des Gehäuses begrenzt ist. Wird der Schraubdeckel, in dem die runde Ablauföffnung untergebracht ist, gelöst, so bewegt sich dieser relativ zum Mittel zum Öffnen oder Schließen des Ablaufs, dessen axiale Bewegung begrenzt ist. Dadurch wird die Dichtung des Mittels aus der Ablauföffnung herausgezogen und diese automatisch zum Ablauf der Flüssigkeitsrückstände freigegeben. Sobald die Flüssigkeit abgelaufen ist, kann der Schraubdeckel vollständig vom Gehäusetopf abgeschraubt werden, um anschließend das Filterelement zu wechseln.

Der Vorteil dieser erfindungsgemäßen Lösung liegt darin, dass die Ablauföffnung automatisch durch teilweises Aufschrauben des Schraubdeckels geöffnet wird. Daher muss der Verschluss der Ablauföffnung nicht für spezielle Werkzeuge, z. B. einen Schraubenschlüssel, zugänglich sein. Da der Aktionsraum eines Öffnungswerkzeuges für die Ablauföffnung nicht beachtet werden muss, kann das erfindungsgemäße Flüssigkeitsfilter auch in beengten Platzverhältnissen eingebaut werden. Hierdurch ergibt sich eine größere geometrische Gestaltungsfreiheit der Brennkraftmaschine.

Ein Filterelement für einen oben beschriebenen Flüssigkeitsfilter weist ein hohlzylindrisch aufgebautes Filtermedium und jeweils eine Endscheibe an den axialen Enden des Filtermediums auf. Das Filterelement ist mit dem Gehäuse verbindbar, wobei durch die Verbindung die Position festgelegt und fixiert wird. An der dem Gehäusetopf gegenüberliegenden Seite ist ein Mittel zum Öffnen oder Verschließen des Gehäuseablaufs angeordnet, wobei das Mittel mit dem Filterelement verbunden ist.

Gemäß der Erfindung ist eine der Endscheiben scheibenförmig geschlossen ausgebildet und mit einem Mittel zum Öffnen und Verschließen des Ablasses verbunden, und die andere Endscheibe ist ringscheibenförmig ausgebildet und weist einen sich axial vom Filtermedium weg erstreckenden Ringkragen auf. Die Endscheiben können hierbei aus einem Kunststoff, wie beispielsweise Polyamid oder Nitrilkautschuk gebildet sein, es ist jedoch auch möglich, hier Endscheiben aus Metall zu verwenden. Die Endscheiben werden über eine Kleb- oder Schweißverbindung mit dem Filtermedium verbunden. Das Mittel zum Öffnen und Verschließen des Ablasses ist mit der einen Endscheibe über eine Clips- oder Schraubverbindung verbunden.

Gemäß der Erfindung ist im Schraubdeckel ein Ablauf für Flüssigkeitsrückstände vorgesehen, der einen Anschluss für eine Ableitungseinrichtung aufweist, die zum Zweck der Ableitung montiert und nach der Ableitung der Flüssigkeitsrückstände wieder demontiert werden kann. Dies hat den Vorteil, dass im direkten Bereich des Ablaufes lediglich Platz für den Anschluss der Ableitungseinrichtung vorhanden sein muss. Diese kann mit dem Ablauf verbunden werden, wobei anschließend der Ablauf geöffnet wird. Die Ableitungseinrichtung befördert die Flüssigkeit zu einem hierfür vorgesehenen Auffangbehälter. Sobald alle Flüssigkeitsrückstände aus dem Gehäuse entfernt sind, kann die Ableitungsvorrichtung demontiert werden, so dass sie die Öffnung des Schraubdeckels nicht weiter behindert.

Gemäß einer besonderen Ausgestaltung der Erfindung besteht die Ableitungsvorrichtung aus einem Schlauch, der auf einen entsprechenden Schlauchstutzen am Schraubdeckel aufsteckbar ist. Diese Variante stellt eine besonders einfache Möglichkeit dar, die Ableitungseinrichtung zu realisieren. Hierdurch entsteht also kein erhöhter Komponentenaufwand, was der Wirtschaftlichkeit der Lösung zuträglich ist. Entsprechende Ableitungsschläuche sind einfach zu beschaffen und in der Service leistenden Werkstatt verfügbar.

Es ist vorteilhaft, am Gehäusetopf ein Stützrohr lösbar oder unlösbar anzuordnen. Hierbei ist das Filterelement auf das Stützrohr aufschiebbar. Derartige Stützrohre sind in manchen Anwendungsfällen vorgesehen, um das Filterelement gegen die am Filtermedium vorliegenden Druckunterschiede abzustützen. Das Stützrohr kann dabei aus einem Kunststoff oder Metall gefertigt sein, bevorzugt ist es im Spritzgießverfahren hergestellt. Die Verbindung zum Gehäusetopf kann über eine Schraub-, Clips- oder auch Bajonettverbindung im lösbaren Fall oder über Kleben oder Schweißen im unlösbaren Fall erfolgen. Falls das Mittel zum Öffnen oder Schließen des Ablaufes mit einem im Filterelement angeordneten Stützrohr verbunden ist, so kann das Filterelement über das im Element angeordnete Stützrohr mit dem Stützrohr, welches am Gehäuse angeordnet ist, verbunden werden. Dieses kann über eine Clips- oder Schraubverbindung erfolgen.

Gemäß einer vorteilhaften Ausgestaltung der Erfindung ist das Filterelement mittels des Ringkragens, welcher an der Endscheibe des Filterelementes angeordnet ist, mit dem Ringkragen des Stützrohres, welches mit dem Gehäuse verbunden ist, in eingesetztem Zustand des Filterelementes verbunden. Diese Verbindung ist flüssigkeitsdicht ausgeführt, so dass an diesem Punkt eine Trennung zwischen Roh- und Reinseite erfolgt. Die Verbindung zwischen den beiden Ringkragen kann hier beispielsweise über eine entsprechend ausgelegte Clipsverbindung erfolgen, wobei die Abdichtung durch eine entsprechende Verpressung und Materialwahl oder auch über zusätzliche Dichthilfsmittel, wie beispielsweise O-Ringe, erfolgen kann.

### Kurze Beschreibung der Zeichnungen

Weitere Einzelheiten der Erfindung werden in der Zeichnung anhand von schematischen Ausführungsbeispielen beschrieben. Hierbei zeigt:
Figur 1 den Längsschnitt durch den erfindungsgemäßen Filter,
Figur 2 den Auslass gemäß Figur 1 in geöffnetem Zustand,
Figur 3 eine weitere Variante des Auslasses gemäß Figur 1 mit aufgestecktem Schlauch und in geschlossenem Zustand.

### Ausführungsform(en) der Erfindung

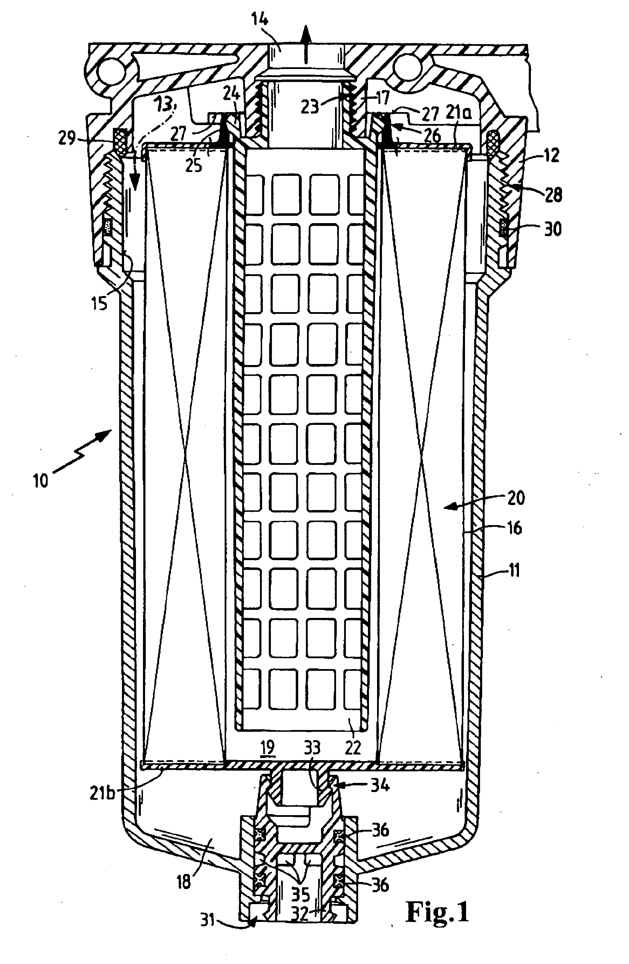

Der in Figur 1 dargestellte Filter besteht aus einem Gehäuse 10, welches einen Schraubdeckel 11 umfasst, welcher in einem Gehäusetopf 12 eingeschraubt ist. Der Gehäusetopf 12 ist als Teil eines nicht dargestellten Motorblockes oder eines separaten Filterkopfes dargestellt. Über diesen Motorblock oder dem separaten Filterkopf sind auch ein Einlass 13 und ein Auslass 14 für das zu filternde Schmieröl der Brennkraftmaschine realisiert. Der Gehäusetopf 12 weist eine nach unten zeigende Einlauföffnung 15 auf, die den Einbau eines Filterelementes 16 gestattet. Diese wird zur Montage auf ein Stützrohr 22 geschoben, wodurch eine Abdichtung zwischen einer Rohseite 18 und einer Reinseite 19 des Filtermediums 20 erreicht wird. Das Filtermedium 20 wird axial durch eine obere Endscheibe 21 a und eine untere Endscheibe 21 b abgeschlossen. Das Stützrohr 22 ist über eine Gewindeverbindung 23 mit dem Gehäusetopf 12 verbunden. Parallel zur Gewindeverbindung 23 weist das Stützrohr 22 mit einem größeren Durchmesser einen Ringkragen 24 auf. Das Filterelement 16 wird über einen sich axial vom Filterelement weg erstreckenden Ringkragen 25 der Endscheibe 21 a über eine dichte Schnappverbindung 26 mit dem Stützrohr verbunden. Die Abdichtung zwischen Roh- und Reinseite erfolgt über die dichte Schnappverbindung 26. Diese kann über eine geeignete Materialwahl und/oder über eine entsprechend starke Verspannung der beiden Teile miteinander erfolgen. Im Gehäusetopf 12 ist im Bereich der Ringkragen 24, 25 ein Axialanschlag 27 für den Ringkragen 25 der Endscheibe 21a des Filterelementes 16 vorgesehen. Gehäusetopf 12 und Schraubdeckel 11 werden über eine Gewindeverbindung 28 miteinander verschraubt. Der Schraubdeckel 11 kann hierbei aus Kunststoff oder Metall ausgeführt sein, wobei vorzugsweise Kunststoff zu verwenden ist. Zur Abdichtung des Flüssigkeitssystems gegenüber der Umwelt ist eine erste umlaufende Dichtung 29 zwischen Gehäusetopf 12 und Schraubdeckel 11 vorgesehen. Weiterhin ist ein zusätzlicher O-Ring 30 im Bereich der Verbindung zwischen Schraubdeckel 11 und Gehäusetopf 12 vorgesehen, um ein Herauslaufen von Flüssigkeit beim Lösen des Schraubdeckels 11 über einen gewissen axialen Bereich zu verhindern. Im unteren Bereich - also dem geodätisch tiefsten Bereich des Schraubdeckels 11 - ist eine Ablauföffnung 31 angeordnet. In diese ragt ein rohrförmiges Teilstück 32, welches an einem Ringkragen 33 der Endscheibe 21 b über eine Clipsverbindung 34 befestigt ist. Das rohrförmige Teilstück 32 weist Durchbrüche 35, die über den Umfang verteilt sind und in das Innere des hohlzylindrischen Teilstückes 32 ragen, auf. Diese Durchbrüche 35 sind von zwei Quadringdichtungen 36 eingerahmt, wobei eine über und eine unter den Durchbrüchen am rohrförmigen Teilstück 32 angeordnet ist. In der dargestellten geschlossenen Form liegen die Durchbrüche 35 im Inneren der Ablauföffnung 31 und werden durch die Quadringdichtungen 36 von der Flüssigkeit im Inneren der Rohseite 18 getrennt.

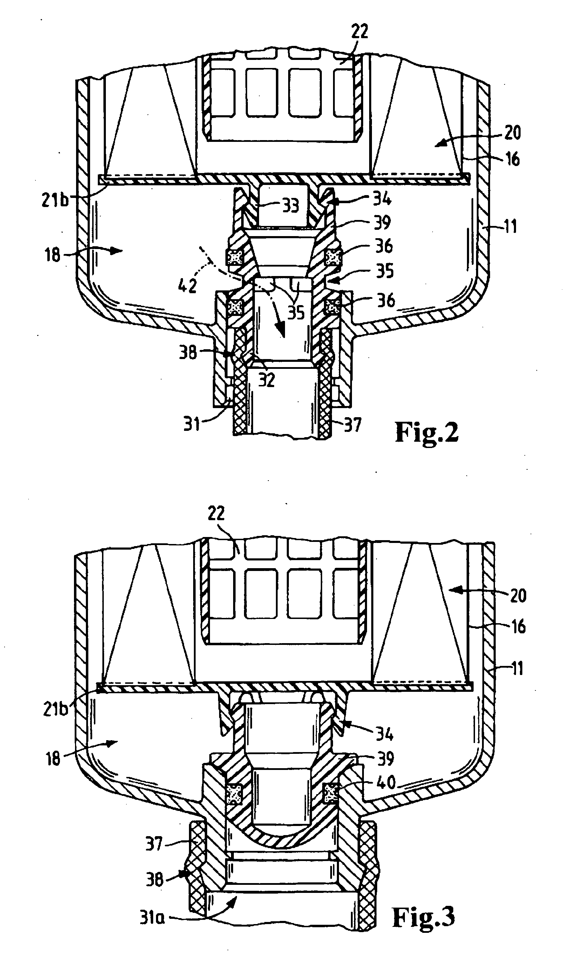

Figur 2 zeigt den Bereich der Ablauföffnung 31 in geöffnetem Zustand. Der vorherigen Figur entsprechende Bauteile sind mit den gleichen Bezugszeichen versehen. Hier ist auf das rohrförmige Teilstück 32 ein Schlauch 37 zur Abfuhr der Flüssigkeit aufgeschoben, welcher durch eine Haltewulst 38 am unteren Bereich des rohrförmigen Teilstücks 32 lösbar fixiert ist. Durch das Losschrauben des Schraubdeckels 11 vom Gehäusetopf 12 verschiebt sich dieser relativ zum durch das Stützrohr 22 gehaltenen Filterelement 16 nach unten, wobei durch den O-Ring 30 ein Auslaufen des Öls im Bereich der Gewindeverbindung 28 verhindert wird. Durch die Relativbewegung in axialer Richtung des Schraubdeckels 11 zum Gehäusetopf 12 werden die Durchbrüche 35 des rohrförmigen Teilstückes 32 freigegeben, wobei dann das im Gehäuse 10 vorhandene Öl in Pfeilrichtung 42 durch die Durchbrüche 35 in das Innere des rohrförmigen Teilstückes 32 fließt und von dort durch den Schlauch 37 einem beispielsweise Auffangbehälter zugeführt werden kann. Dadurch wird erreicht, dass vor der vollständigen Demontage des Schraubdeckels 11 dieser definiert leer laufen kann, wobei das herausfließende Öl aufgefangen werden kann, um daraufhin entsorgt zu werden. Im Anschluss an das Leerlaufen kann der Schraubdeckel 11 ohne Gefahr einer Ölverschmutzung der Umgebung entfernt werden und anschließend das Element 16 vom Stützrohr 22 abgezogen werden, um gegen ein neues Element im Wartungsfall ausgetauscht zu werden.

Figur 3 zeigt eine Variante des Flüssigkeitsfilters in geschlossenem Zustand im Bereich der Ablauföffnung 31. Den vorherigen Figuren entsprechende Bauteile sind mit den gleichen Bezugszeichen versehen. In diesem Fall weist die Ablauföffnung 31 a einen Außenwulst 38 auf, über den der Ablaufschlauch 37 lösbar am Gehäuse 11 gehalten wird. Die Ablauföffnung 31 a wird über einen Dichtstempel 39 dichtend verschlossen, wobei dieser Dichtstempel im Bereich seines axialen Endes eine umlaufende Dichtung 40 aufweist. Der Dichtstempel 39 ist - wie in den vorherigen Figuren dargestellt - über eine Clipsverbindung 34 mit der Endscheibe 21 b des Filterelementes 16 verbunden. Bei einem Lösen des Schraubdeckels 11 verschiebt sich dieser wiederum axial und der Dichtstempel 39 gibt nach einer gewissen Axialbewegung des Schraubdeckels 11 die Ablauföffnung 31a frei, so dass das auf der Rohseite 18 vorhandene Öl den Dichtstempel 39 umfließen kann und durch den Schlauch 37 entsorgt werden kann. Diese Ausführungsform ist besonders einfach im Aufbau und daher kostengünstig.

## Patentansprüche

1. Flüssigkeitsfilter, insbesondere für das Schmieröl einer Brennkraftmaschine, welcher ein Gehäuse (10) mit einem Einlass und einem Auslass (14), bestehend aus einem mit einer Einbauöffnung im Wesentlichen nach unten weisenden Gehäusetopf (12) und einem die Einbauöffnung verschließenden Schraubdeckel (11) aufweist, wobei der Schraubdeckel (11) einen Ablauf für im Gehäuse vorhandene Flüssigkeitsrückstände aufweist, wobei der Ablauf eine Ablauföffnung (31, 31a) aufweist und wobei im Gehäuse ein Filterelement (16) angeordnet ist, welches den Einlass dichtend vom Auslass trennt und welches jeweils eine Endscheibe (21 a, 21 b) an den axialen Enden des Filterelements aufweist, wobei im Bereich des Ablaufes ein Mittel (32) zum Öffnen und Verschließen des Ablaufes angeordnet ist, wobei das Mittel zum Öffnen und Verschließen des Ablaufes an einem axialen Ende des Filterelementes (16) angeordnet und mit diesem verbunden ist, wobei das Mittel (32) die in der Mittelachse des Gehäuses angeordnete, runde Ablauföffnung (31a) des Ablaufes (31) dichtend verschließt und das Mittel in der Ablassöffnung axial beweglich ist und wobei die Ablauföffnung (31, 31a) über einen Dichtstempel (39) dichtend verschlossen ist, wobei dieser Dichtstempel im Bereich seines axialen Endes eine umlaufende Dichtung (40) aufweist, **dadurch gekennzeichnet, dass** eine der Endscheiben (21 b) scheibenförmig geschlossen ausgebildet und mit dem Mittel zum Öffnen und Verschließen des Ablasses verbunden ist und die andere Endscheibe (21 a) ringscheibenförmig ausgebildet ist und einen sich axial vom Filtermedium weg erstreckenden Ringkragen aufweist und dass der Dichtstempel (39) über eine Clipsverbindung (34) mit der Endscheibe (21b) des Filterelementes (16) verbunden ist.

2. Flüssigkeitsfilter nach Anspruch 1, **dadurch gekennzeichnet, dass** der Ablauf mit einem Anschluss für eine Ableitungseinrichtung versehen ist, wobei die Ableitungseinrichtung demontierbar ist.

3. Flüssigkeitsfilter nach einem der vorhergehenden Ansprüche, **dadurch gekennzeichnet, dass** im Gehäusetopf (12) ein Stützrohr (22) lösbar oder unlösbar angeordnet ist, wobei das Filterelement (16) auf das Stützrohr (22) aufschiebbar ist.

4. Flüssigkeitsfilter nach Anspruch 3, **dadurch gekennzeichnet, dass** das Stützrohr (22) einen ringförmigen, konzentrischen sich axial in Richtung Gehäusetopf erstreckenden Ringkragen (24) aufweist, derart, dass das axiale Ende des Ringkragens an der Anschlagfläche (27) des Filtergehäuses anliegt.

5. Flüssigkeitsfilter nach Anspruch 4, **dadurch gekennzeichnet, dass** das Filterelement mittels des Ringkragens (25) mit dem Ringkragen (24) des Stützrohres im eingesetzten Zustand des Filterelementes flüssigkeitsdicht verbunden ist.

## Claims

1. Liquid filter, in particular for the lubricating oil of an internal combustion engine which features a housing (10) with an inlet and an outlet (14), consisting of a housing pot (12) with an installation opening pointing basically downwards and a threaded cap (11) closing the installation opening, the threaded cap (11) featuring a discharge for the residual liquid in the housing, the discharge featuring a discharge opening (31, 31a) and a filter element (16) being disposed in the housing which separates the inlet sealingly from the outlet and which features an end plate (21 a, 21 b) each at the axial ends of the filter element, a device (32) for opening and closing the discharge being disposed in the area of the discharge, the device for opening and closing the discharge being disposed at one axial end of the filter element (16) and being connected with it, the device (32) closing sealingly the circular discharge opening (31 a) of the discharge (31) disposed in the central axis of the housing and the device being axially movable in the discharge opening, the discharge opening (31, 31a) being sealingly closed by a sealing die (39), this sealing die featuring a circumferential sealing (40) in the area of its axial end, **characterized in that** one of the end plates (21 b) is designed disk-shaped and closed and connected with the device for opening and and closing the discharge and the other end plate (21 a) is designed in annular shape and features an annular collar extending axially away from the filter medium and that the sealing die (39) is connected via a clip connection (34) with the end plate (21 b) of the filter element (16).

2. Liquid filter according to claim 1, **characterized in that** the discharge is provided with a connection for a drain device, and the drain device being removable.

3. Liquid filter according to one of the above-mentioned claims, **characterized in that** a support tube (22) is disposed detachably or undetachably in the housing pot (12), the filter element (16) being capable to be slid on the support tube (22).

4. Liquid filter according to claim 3, **characterized in that** the support tube (22) features a ring-shaped, concentric annular collar (24) extending axially in the direction of the housing pot in such a way that the axial end of the annular collar (24) abuts the stop face (27) of the filter housing.

5. Liquid filter according to claim 4, **characterized in that** the filter element is connected fluid-tight by means of the annular collar (25) with the annular collar (24) of the support tube when the filter element is inserted.

## Revendications

1. Filtre à liquide, en particulier pour l'huile de lubrification d'un moteur à combustion interne, qui présente un boîtier (10) avec une entrée et une sortie (14) constitué d'un pot de boîtier (12) tourné pour l'essentiel vers le bas avec une ouverture de montage et d'un couvercle vissé (11) fermant l'ouverture de montage, le couvercle vissé (11) présentant une évacuation pour les résidus de liquide présents dans le boîtier, l'évacuation présentant une ouverture d'évacuation (31, 31a) et un élément filtrant (16) étant placé dans le boîtier, élément qui sépare hermétiquement l'entrée de la sortie et qui présente à chaque fois une plaque d'extrémité (21 a, 21 b) au niveau des extrémités axiales de l'élément filtrant, un moyen (32) étant placé au niveau de l'évacuation pour ouvrir et fermer l'évacuation, le moyen d'ouverture et de fermeture d'évacuation étant placé à une extrémité axiale de l'élément filtrant (16) et étant relié à lui, le moyen (32) fermant hermétiquement l'ouverture d'évacuation ronde (31 a) de l'évacuation (31) située sur l'axe médian du boîtier et le moyen étant mobile axialement dans l'ouverture d'évacuation, et l'ouverture d'évacuation (31, 31 a) étant fermée hermétiquement par un poinçon d'étanchéité (39), ce poinçon d'étanchéité présentant un joint périphérique (40) au niveau de son extrémité axiale, **caractérisé en ce que** l'une des plaques d'extrémité (21 b) est réalisée fermée en forme de disque et est reliée au moyen d'ouverture et de fermeture de la sortie et l'autre plaque d'extrémité (21 a) est réalisée en forme de disque annulaire et présente une collerette annulaire s'écartant axialement du milieu filtrant, et **en ce que** le poinçon d'étanchéité (39) est relié par une liaison clipsée (34) à la plaque d'extrémité (21 b) de l'élément filtrant (16).

2. Filtre à liquide selon la revendication 1, **caractérisé en ce que** l'évacuation est munie d'un raccord pour un dispositif d'évacuation, le dispositif d'évacuation étant démontable.

3. Filtre à liquide selon l'une des revendications précédentes, **caractérisé en ce que** dans le pot de boîtier (12) est placé un tube support (22) amovible ou inamovible, l'élément filtrant (16) pouvant être enfilé sur le tube support (22).

4. Filtre à liquide selon la revendication 3, **caractérisé en ce que** le tube support (22) présente une collerette annulaire (24) concentrique s'étendant axialement dans la direction du pot de boîtier, de telle manière que l'extrémité axiale de la collerette annulaire s'appuie contre la surface de butée (27) du boîtier de filtre.

5. Filtre à liquide selon la revendication 4, **caractérisé en ce que** l'élément filtrant est relié d'une manière hermétique au fluide, au moyen de la collerette annulaire (25), à la collerette annulaire (24) du tube support à l'état inséré de l'élément filtrant.
